# EUROPEAN PATENT APPLICATION

(11) **EP 3 312 819 A1**
(43) Date of publication of application: **25.04.2018**
(21) Application number: 17197600.4
(22) Date of filing: 20.10.2017
(51) Int. Cl.: G08C 17/02, H04Q 9/00

(54) **SYSTEMS AND METHODS FOR DIAGNOSTICS TO SUPPORT OPERATION OF A GARAGE DOOR OPENER USING ASYNCHRONOUS REPORTING OF LOGGED DATA**

(30) Priority: 20.10.2016 US 201662410542 P
(71) Applicant: TTI (Macao Commercial Offshore) Limited, Macao (MO)
(72) Inventor: Preus, Michael, Greenville, South Carolina 29615 (US); McNabb, William, Anderson, South Carolina 29621 (US)
(74) Representative: Stevenson-Hill, Jack Patrick

(57) **Abstract**

A garage door opener system includes an electronic processor, a memory, a network interface, a user interface and various sensors. Condition events that are sensed or received in the garage door opener system are logged to memory as event data reports in instances when the condition logging events occur. The event data reports are transmitted to a remote server upon occurrence of a condition reporting event, which is different from the condition logging event. The condition logging events may include detecting a change in sensor data, detecting a change in data from a component of the garage door opener system, and receiving a request from the user interface. Diagnostic information is generated based on the sensor or component information and transmitted to the remote server.

## Description

### TECHNICAL FIELD

The present invention relates to a garage door opener system and method. More specifically, certain embodiments of the invention relate to sensing condition events that occur in or near a garage door opener system and taking action based on the condition events.

### SUMMARY

The present invention provides, in one aspect, a garage door opener including a processor, a memory coupled to the processor, a network interface coupled to the processor, and one or more sensors coupled to the processor. The garage door opener further includes program instructions, stored in the memory, for causing, responsive to a garage door opener system condition logging event, the processor of the garage door opener recording to the memory of the garage door opener a garage door opener event data report comprising system condition data collected from the one or more sensors of the garage door opener. The garage door opener further includes program instructions, stored in the memory, for causing, responsive to a garage door system condition reporting event, the processor of the garage door opener reporting over the network interface of the garage door opener to a remote server one or more garage door opener event data reports. In some embodiments, the one or more garage door opener event data reports comprise the garage door opener event data report, and the garage door system condition reporting event requires one or more conditions distinct from conditions of the garage door system condition logging event.

In some embodiments, the processor of the garage door system performs reporting over the network interface of the garage door opener to the remote server the one or more garage door opener event data reports asynchronous to the processor of the garage door opener recording to the memory of the garage door opener the garage door opener event data report comprising the system condition data.

In some embodiments, the processor of the garage door system performs reporting over the network interface of the garage door opener to the remote server the one or more garage door opener event data reports on a periodic time schedule, and the processor of the garage door opener records to the memory of the garage door opener the garage door opener event data report comprising the system condition data in response to aperiodic system interrupts. In some embodiments, the aperiodic system interrupts include interface events. In some embodiments, the aperiodic system interrupts include sensor data alarm events.

In some embodiments, the processor of the garage door system performs reporting over the network interface of the garage door opener to the remote server the one or more garage door opener event data reports in response to a first set of system interrupts, and the processor of the garage door opener records to the memory of the garage door opener the garage door opener event data report including the system condition data in response to a second set of system interrupts. In some embodiments, the second set of system interrupts includes interface events and the first set of interrupts includes network data request events.

Some embodiments provide an overhead garage door opener system equipped for diagnosing operations of an overhead garage door opener. In some embodiments, the system includes a garage door opener including a processor, a memory coupled to the processor, a network interface coupled to the processor, and one or more sensors coupled to the processor. The garage door opener system further includes, in some embodiments, program instructions, stored in the memory, for causing, responsive to a garage door opener system condition logging event, a processor of a garage door opener recording to a memory of the garage door opener a garage door opener event data report including system condition data collected from one or more sensors of the garage door opener. The garage door opener system further includes, in some embodiments, program instructions, stored in the memory, for causing, responsive to a garage door system condition reporting event, a processor of the garage door opener reporting over a network interface of the garage door opener to a remote server one or more garage door opener event data reports.

In some embodiments, the one or more garage door opener event data reports include the garage door opener event data report and diagnostic information derived at least in part from the garage door opener event data reports.

The garage door opener system further includes, in some embodiments, program instructions, stored in the memory, for causing, the processor of the garage door system generating the diagnostic information based at least in part on sensor information from one or more garage door opener event data reports.

In some embodiments, the processor of the garage door system performs generating the diagnostic information based at least in part on sensor information from one or more garage door opener event data reports on a periodic time schedule, and the processor of the garage door opener records to the memory of the garage door opener the garage door opener event data report including the system condition data in response to aperiodic system interrupts. In some embodiments, the aperiodic system interrupts include interface events. In some embodiments, the aperiodic system interrupts include sensor data alarm events.

In some embodiments, the processor of the garage door system performs reporting over the network interface of the garage door opener to the remote server the one or more garage door opener event data reports in response to a first set of system interrupts, and the processor of the garage door opener records to the memory of the garage door opener the garage door opener event data report including the system condition data in response to a second set of system interrupts. In some embodiments, the second set of system interrupts includes interface events and the first set of interrupts includes network data request events.

Some embodiments include a method for collecting data representing operations of an overhead garage door opener. In some embodiments, the method includes, responsive to a garage door opener system condition logging event, a processor of a garage door opener recording to a memory of the garage door opener a garage door opener event data report including system condition data collected from one or more sensors of the garage door opener, and responsive to a garage door system condition reporting event, a processor of the garage door opener reporting over a network interface of the garage door opener to a remote server one or more garage door opener event data reports, wherein the one or more garage door opener event data reports include the garage door opener event data report, and the garage door system condition reporting event requires one or more conditions distinct from conditions of the garage door system condition logging event.

In some embodiments, the method includes the processor of the garage door system reporting over the network interface of the garage door opener to the remote server the one or more garage door opener event data reports asynchronous to the processor of the garage door opener recording to the memory of the garage door opener the garage door opener event data report including the system condition data.

In some embodiments, the method includes the processor of the garage door system reporting over the network interface of the garage door opener to the remote server the one or more garage door opener event data reports on a periodic time schedule, and the processor of the garage door opener recording to the memory of the garage door opener the garage door opener event data report including the system condition data in response to aperiodic system interrupts. In some embodiments, the aperiodic system interrupts include interface events. In some embodiments, the aperiodic system interrupts include sensor data alarm events.

In some embodiments, the method includes the processor of the garage door system reporting over the network interface of the garage door opener to the remote server the one or more garage door opener event data reports in response to a first set of system interrupts, and the processor of the garage door opener recording to the memory of the garage door opener the garage door opener event data report including the system condition data in response to a second set of system interrupts. In some embodiments, the second set of system interrupts includes interface events and the first set of interrupts includes network data request events.

Some embodiments include a method for diagnosing operations of an overhead garage door opener. In some embodiments, the method includes, responsive to a garage door opener system condition logging event, a processor of a garage door opener recording to a memory of the garage door opener a garage door opener event data report including system condition data collected from one or more sensors of the garage door opener. In some embodiments, the method includes, responsive to a garage door system condition reporting event, a processor of the garage door opener reporting over a network interface of the garage door opener to a remote server one or more garage door opener event data reports. The one or more garage door opener event data reports include the garage door opener event data report and diagnostic information derived at least in part from the garage door opener event data reports.

In some embodiments, the method includes the processor of the garage door system generating the diagnostic information based at least in part on sensor information from one or more garage door opener event data reports.

In some embodiments, the method includes the processor of the garage door system generating the diagnostic information based at least in part on sensor information from one or more garage door opener event data reports on a periodic time schedule, and the processor of the garage door opener recording to the memory of the garage door opener the garage door opener event data report including the system condition data in response to aperiodic system interrupts. In some embodiments, the aperiodic system interrupts include interface events. In some embodiments, the aperiodic system interrupts include sensor data alarm events.

In some embodiments, the method includes the processor of the garage door system reporting over the network interface of the garage door opener to the remote server the one or more garage door opener event data reports in response to a first set of system interrupts, and the processor of the garage door opener recording to the memory of the garage door opener the garage door opener event data report including the system condition data in response to a second set of system interrupts. In some embodiments, the second set of system interrupts includes interface events and the first set of interrupts includes network data request events.

Other features and aspects of the invention will become apparent by consideration of the following detailed description and accompanying drawings.

### BRIEF DESCRIPTION OF THE DRAWINGS

FIG. 1 is a view of a garage door opener system.
FIG. 2 is a view of a garage door opener of the garage door system in FIG. 1.
FIGS. 3A and 3B are a block power diagram of the garage door opener of FIG. 2.
FIG. 4 is a block communication diagram of the garage door opener of FIG. 2.
FIG. 5 is a diagram of a diagnostic and event reporting system for the garage door opener of FIG. 2.
FIG. 6 is flowchart for reporting event data from a garage door opener.
FIG. 7 is flowchart for diagnostic reporting for a garage door opener.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

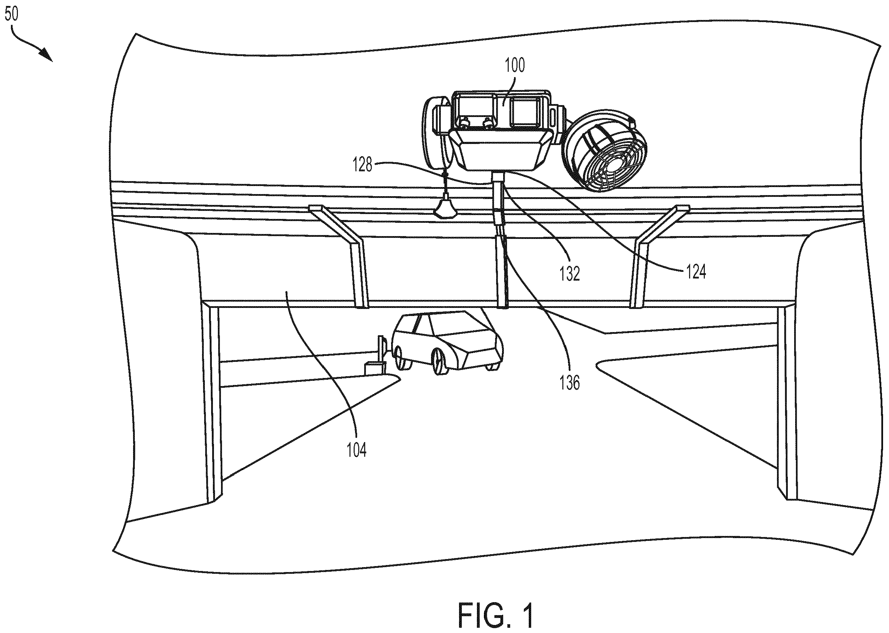

FIGS. 1-2 illustrate a garage door system 50 including a garage door opener 100 operatively coupled to a garage door 104. The garage door opener 100 includes a housing 108 supporting a motor that is operatively coupled to a drive mechanism 116. The drive mechanism 116 includes a transmission coupling the motor to a drive chain 120 having a shuttle 124 configured to be displaced along a rail assembly 128 upon actuation of the motor. The shuttle 124 may be selectively coupled to a trolley 132 that is slidable along the rail assembly 128 and coupled to the garage door 104 via an arm member.

The trolley 132 is releaseably coupled to the shuttle 124 such that the garage door system 50 is operable in a powered mode and a manual mode. In the powered mode, the trolley 132 is coupled to the shuttle 124 and the motor is selectively driven in response to actuation by a user (e.g., via a key pad or wireless remote in communication with the garage door opener 100). As the motor is driven, the drive chain 120 is driven by the motor along the rail assembly 128 to displace the shuttle 124 (and, therefore, the trolley 132), thereby opening or closing the garage door 104. In the manual mode, the trolley 132 is decoupled from the shuttle 124 such that a user may manually operate the garage door 104 to open or close without resistance from the motor. The trolley 132 may be decoupled, for example, when a user applies a force to a release cord 136 to disengage the trolley 132 from the shuttle 124. In some embodiments, other drive systems are included such that, for example, the drive mechanism 116 includes a transmission coupling the motor to a drive belt that is operatively coupled to the garage door 104 via a rail and carriage assembly.

The housing 108 is coupled to the rail assembly 128 and a surface above the garage door (e.g., a garage ceiling or support beam) by, for example, a support bracket 148. The garage door opener further includes a light unit 152 including a light (e.g., one or more light emitting diodes (LEDs)) enclosed by a transparent cover or lens 156), which provides light to the garage. The light unit 152 may either be selectively actuated by a user or automatically powered upon actuation of the garage door opener 100. In one example, the light unit 152 may be configured to remain powered for a predetermined amount of time after actuation of the garage door opener 100.

The garage door opener 100 further includes an antenna 158 enabling the garage door opener 100 to communicate wirelessly with other devices, such as a smart phone or network device (e.g., a router, hub, or modem), as described in further detail below. The garage door opener 100 is also configured to receive, control, and/or monitor a variety of accessory devices, such as a backup battery unit 190, a speaker 192, a fan 194, an extension cord reel 196, among others.

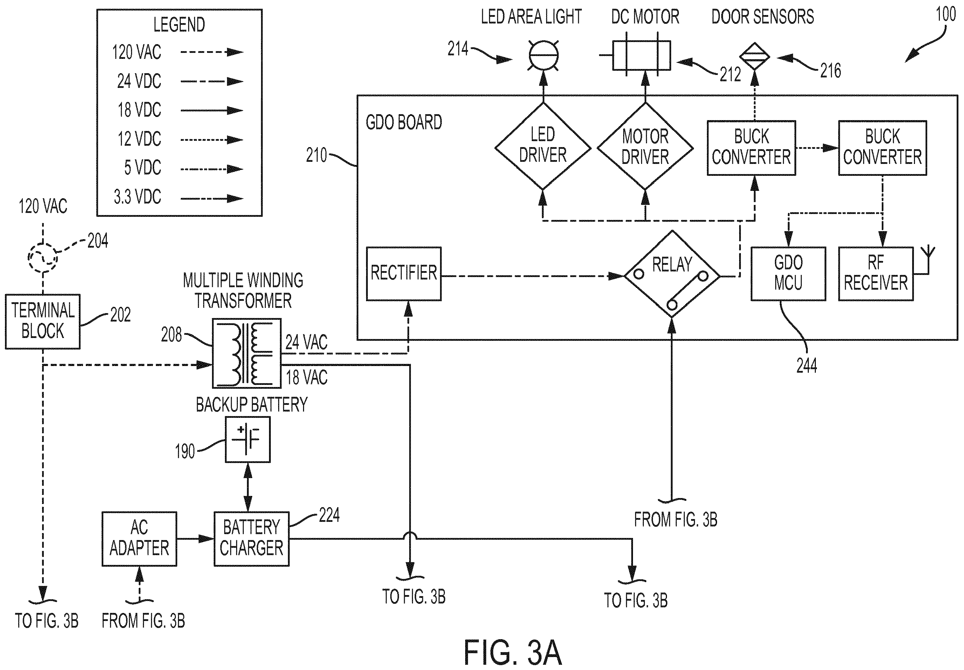

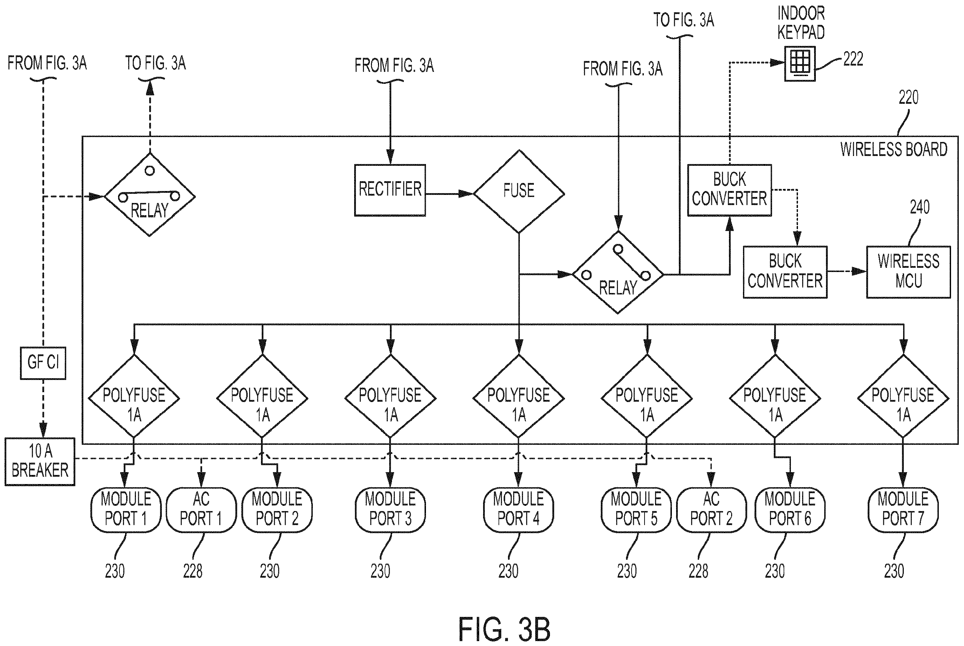

FIGS. 3A and 3B illustrate a block power diagram of the garage door opener 100. The garage door opener 100 includes a terminal block 202 configured to receive power from an external power source 204, such as a standard 120 VAC power outlet. The terminal block 202 directs power, via a transformer 208, to a garage door opener (GDO) board 210 for supply to components thereof as well as a motor 212 (used to drive the drive mechanism 116, as described above), LEDs 214 (of the light unit 152), and garage door sensors 216. The terminal block 202 further directs power via the transformer 208 to a wireless board 220 and components thereof, as well as a wired keypad 222 and module ports 223. The terminal block 202 also directs power to a battery charger 224 and AC ports 228. The module ports 223 are configured to receive various accessory devices, such as a speaker, a fan, an extension cord reel, a parking assist laser, an environmental sensor, a flashlight, and a security camera. One or more of the accessory devices are selectively attachable to and removable from the garage door opener 100, and may be monitored and controlled by the garage door opener 100.

The wireless board 220 includes a wireless microcontroller 240, among other components. The GDO board 210 includes, among other components, a garage door opener (GDO) microcontroller 244 and a radio frequency (RF) receiver 246.

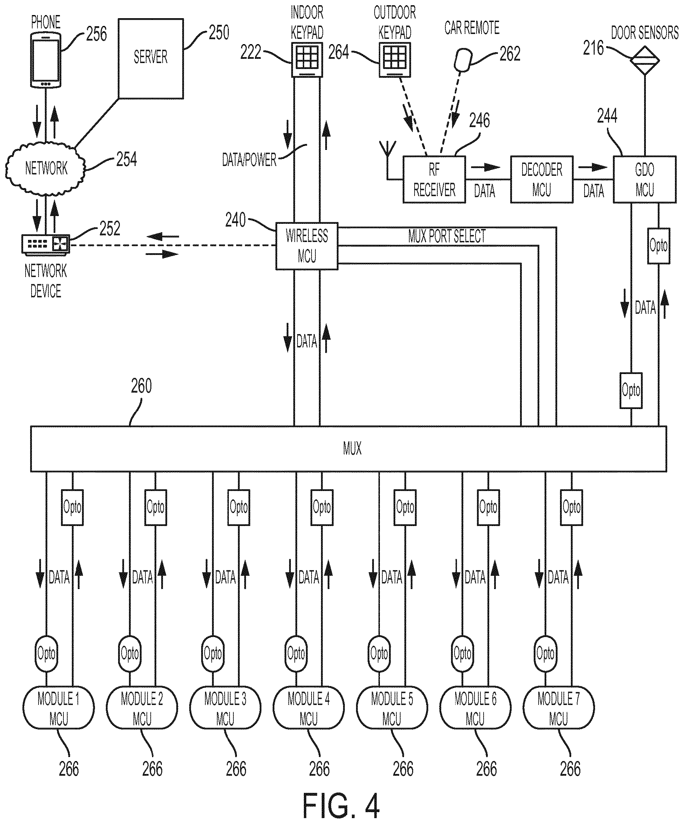

FIG. 4 illustrates a block communication diagram of the garage door opener 100. The wireless microcontroller 240 is coupled to the antenna 158 and enables wireless communication with a server 250 via a network device 252 and network 254, as well as with a personal wireless device 256 (such as a smart phone, a tablet, or laptop). The network device 252 may be, for example, one or more of a router, hub, or modem. The network 254 may be, for example, the Internet, a local area network (LAN), another wide area network (WAN) or a combination thereof. The wireless microcontroller 240 may include, for example, a Wi-Fi radio including hardware, software, or a combination thereof enabling wireless communications according to the Wi-Fi protocol. In other embodiments, the wireless microcontroller 240 is configured to communicate with the server 250, which may be remotely located, via the network device 252 and network 254 using other wireless communication protocols. The network 254 may include various wired and wireless connections to communicatively couple the garage door opener 100 to the server 250. As illustrated, the wireless microcontroller 240 also includes wired communication capabilities for communicating with the GDO microcontroller 244 via the multiplexor 260. In some embodiments, the wireless microcontroller 240 and the GDO microcontroller 244 are directly coupled for communication. In some embodiments, the wireless microcontroller 240 and the GDO microcontroller 244 are combined into a single controller.

The RF receiver 246 is wirelessly coupled to various user actuation devices, including one or more wireless remotes 262 and wireless outdoor keypads 264, to receive and provide to the GDO microcontroller 244 user actuation commands (e.g., to open and close the garage door 104). The personal wireless device 256 may also receive user input and, in response, provide (directly or via the network 254) to the wireless microcontroller 240 user actuation commands for the garage door opener 100 or commands to control one or more of the accessory devices. The multiplexor 260 enables communication between and among the wireless microcontroller 240, the GDO microcontroller 244, and the accessory microcontrollers 266 (of the accessory devices previously noted).

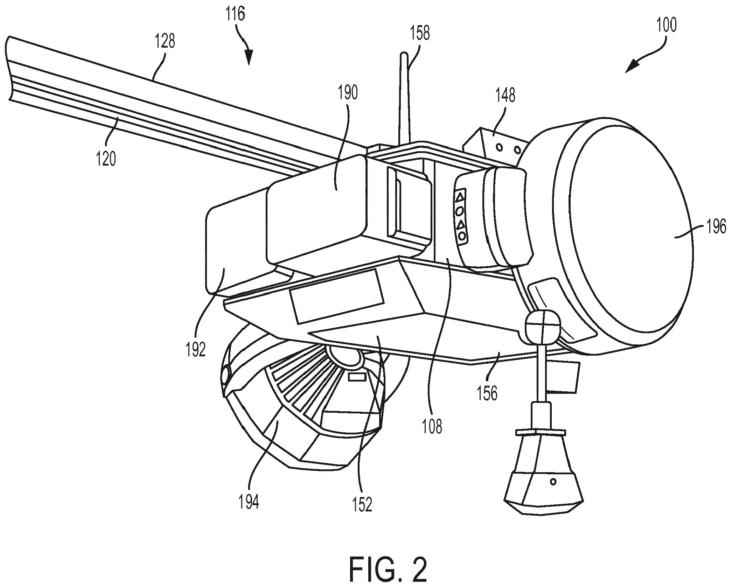

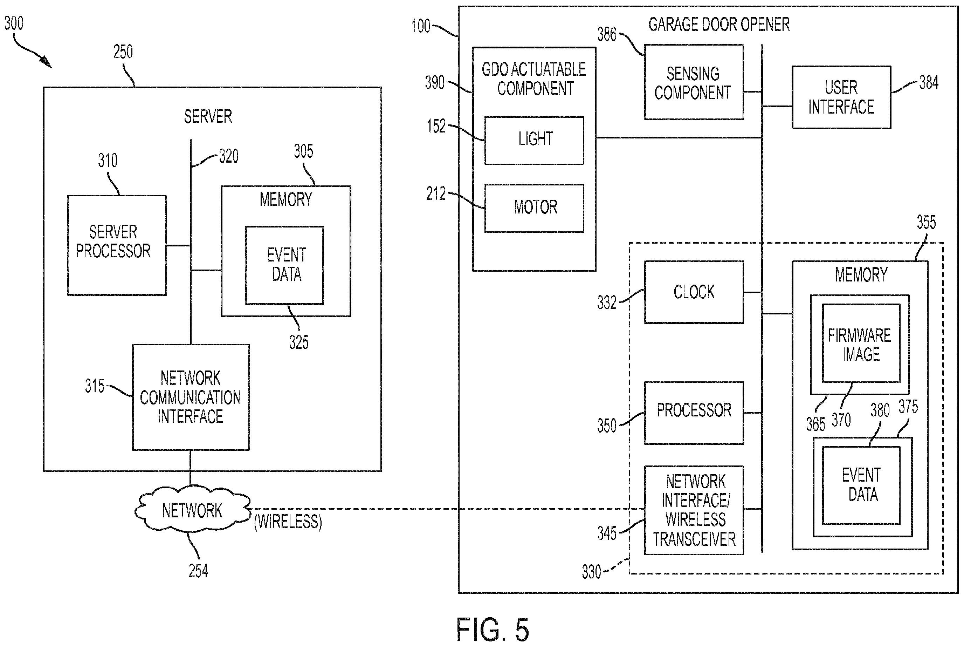

FIG. 5 is a diagram of a diagnostic and event reporting system for the garage door opener of FIG. 2. The diagnostic and event reporting system 300 includes the garage door opener 100, server 250, and network 254. For ease of illustration and description, the network device 252 is considered part of the network 254 in FIG. 5 and not separately illustrated. The server 250 includes a server memory 305, a server processor (e.g., an electronic server processor) 310, and a network communication interface 315 coupled by a communication bus 320. The server memory 305 stores event data 325.

The garage door opener 100 includes a controller 330. Only select components of the controller 330 are illustrated, including a network interface 345 (e.g., including a wireless transceiver), a clock 332, a processor (e.g., an electronic processor) 350, and a memory 355. The network interface 345 may be part of the wireless microcontroller 240 (FIG. 4). The processor 350 and memory 355 may be part of the GDO microcontroller 244 (FIG. 4). The processor 350, memory 355, and network interface 345 are in communication via a communication bus 360, which may include the multiplexor 260 (FIG. 4). The memory 355 includes a first nonvolatile memory block 365 storing a firmware image 370 and a second nonvolatile memory block 375 storing event data 380.

The garage door opener 100 further includes one or more sensing components 386, such as door sensors 216 of FIG. 3, a passive infrared (PIR) motion sensor, a camera, a heat sensor, an electro-sensitivity scanner, or a proximity sensor. The camera may be associated with one or more of motion, facial, person, animal recognition software, which may be stored in the memory 355 and executed by the processor 350 to perform such recognition. The garage door opener 100 further includes one or more user interfaces 384, such as the indoor keypad 222, the outdoor keypad 264, the car remote 262, and the personal wireless device 256 (see FIG. 3). The garage door opener 100 also includes one or more garage door opener actuatable components 390, such as the light unit 152 and the motor 212.

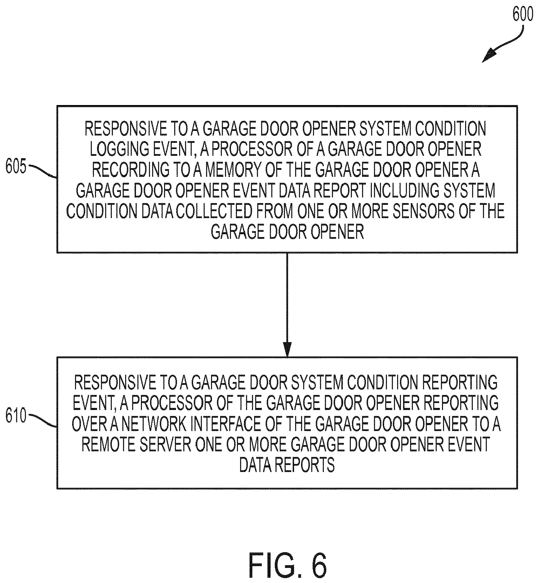

FIG. 6 is flowchart of a method for reporting event data from the garage door opener 100. Responsive to a garage door opener system condition logging event (herein, a "logging event"), the processor 350 records to the memory 355 a garage door opener event data report (herein, an "event data report") including system condition data collected from one or more sensors of the garage door opener (block 605). In some embodiments, the logging event includes detection of a change in data received at a sensing component 386 of FIG. 5, such as a door sensor 216 of FIG. 2 detecting a change of position of a door, or the PIR motion sensor or camera detecting motion. In some embodiments, the logging event includes detection of a request for activation of a component of the garage door opener at the user interface 384 of FIG. 5, such as indoor keypad 222, an outdoor keypad 264, or car remote 262. In some embodiments, the logging event includes detection of a change in data received from a system component, such as a change in a motor voltage reading in motor 212 of FIG. 5. In some embodiments, in block 605, the processor 350 of the garage door opener 100 records to the memory 355 an event data report (e.g., as the event data 380) under control of instructions present in firmware image 370.

In some embodiments, the system condition data is obtained from the sensing component(s) 386 and indicates an instance of opening the garage door with indoor keypad, closing the garage door with outdoor keypad, opening the garage door with personal wireless device, enabling the light unit 152, detecting motion, errors/faults of components, and the like. In some embodiments, the system condition data includes measurements, such as a current level of the motor 212, provided by the sensing component 386. In some embodiments, the system condition data includes image, video, or audio data obtained by the sensing component 386 (e.g. taking the form of a camera). The system condition data may further be associated with a timestamp obtained based on the clock 332.

Responsive to a garage door system condition reporting event (herein, "a "reporting event"), the processor 350 reports over the network 254 to the server 250 one or more event data reports (block 610). Examples of such reporting events include time as measured by clock 332 reaching a scheduled reporting time (e.g., daily at 1:00 am, or once an hour), an error condition reported by processor 350, and a request for performance of reporting at user interface 384. In some embodiments, reporting over the network interface 345 includes wireless transmission of the event data 380 using the network interface 345 over the network 254 to the server 250 for storage as the event data 325 in the server memory 305. In some embodiments, an identifier of the garage door opener 100, such as a unique serial number, is provided with the event data report for indexing in the server memory 305 enabling later retrieval.

In some embodiments, the one or more event data reports reported in block 610 include groups of event data reports that are aggregated over time and transmitted as a batch, rather than transmitted individually at the time of generation or individually upon a reporting event. In some embodiments, the reporting event requires one or more conditions distinct from conditions of the garage door system condition logging event. For example, in some embodiments, the reporting event is a request for data received from the server 250 over the network interface 345, while the garage door system condition logging event is a sensor reading from the sensing component 386.

In some embodiments, the processor 350 performs reporting over the network interface 345 to the server 250 the one or more event data reports asynchronous to the processor 350 recording to the memory 355 the event data report including the system condition data.

In some embodiments, the processor 350 performs reporting over the network interface 345 to the server 250 of the one or more event data reports on a periodic time schedule as defined by clock 332, and the processor 350 of the garage door opener 100 records to the memory 355 of the garage door opener 100 the event data report including the system condition data in response to aperiodic system interrupts, such as sensor readings from sensing component 386. In some embodiments, the aperiodic system interrupts include interface events, such as user input from a user interface 384. In some embodiments, the aperiodic system interrupts include sensor data alarm events, such as the detection of an excessive voltage reading in electric motor 212.

In some embodiments, the processor 350 performs reporting over the network interface 345 to the server 250 the one or more event data reports in response to a first set of system interrupts, such as a periodic broadcast schedule tied to clock 332. In such embodiments, the processor 350 further records to the memory 355 the event data report, as event data 380, including the system condition data, such as sensor readings at a sensing component 386, in response to a second set of system interrupts, such as receipt of data readings from sensing component 386. In some embodiments, the second set of system interrupts includes interface events, such as user input at a user interface 384, and the first set of interrupts includes network data request events received from server 250 over network 254.

In some embodiments, a method of receiving and analyzing event data reports is performed by the server 250. For example, the server processor 310 receives event data reports generated by the processor 350 via the network 254, where the event data reports are sent by the processor 350 responsive to reporting event as described with respect to block 610 and where the event data reports were generated by the processor 350 in response to respective logging events as described with respect to block 605.

The server processor 310 stores the received event data reports in the server memory 305 as the event data 325, and analyzes the event data reports to generate diagnostic information regarding the garage door opener 100. For example, the server processor 310 may analyze the event data reports to determine a typical load on the motor 212 (e.g., based on sensed motor current by the sensing component 386) during opening or closing operations of the garage door opener 100. Based on the determined load, the server processor 310 identifies the type of garage door driven by the garage door opener 100, adjusts motor cycling to increase the life of the motor 212. In another example, the server processor 310 may analyze the event data reports over time to determine whether the load on the motor 212 is increasing over time (e.g., with a slope that exceeds a predetermined threshold or if the load exceeds a predetermined threshold). In response to determining that the load on the motor exceeds a slope or other threshold, the server processor 310 generates a notification to indicate that springs attached to the garage door should be replaced. The notification may be communicated to personal wireless device 256 via the network 254. In another example, the server processor 310 generates the diagnostic information by executing diagnostic reporting algorithms to pair error messages and associated sensor readings that are linked by a common time stamp from the clock 332. Further examples of generated diagnostic information include filtered data readings, averages of data readings, collections of error messages, or system interrupts.

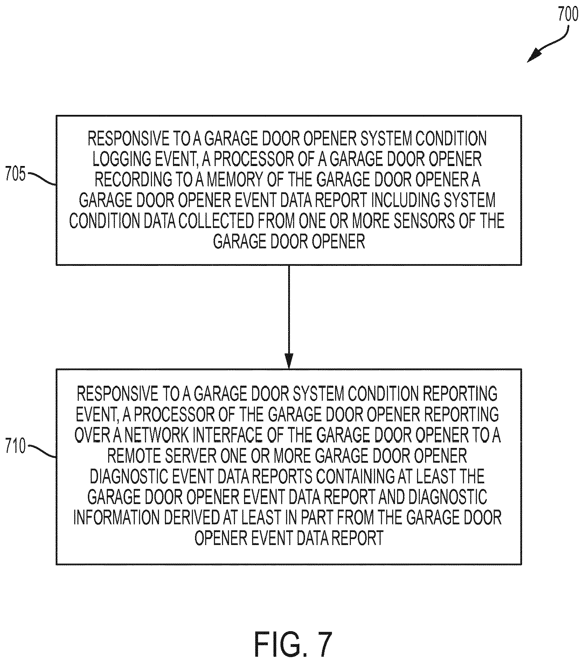

FIG. 7 is flowchart for diagnostic reporting in a garage door opener. Responsive to a logging event of the garage door opener 100, the processor 350 records to the memory 355 an event data report including system condition data collected from one or more sensors of the garage door opener 100 (block 705), such as described above with respect to block 605 of FIG. 6.

Responsive to a reporting event of the garage door opener 100, the processor 350 reports over the network interface 345 to the server 250 one or more garage door opener diagnostic event data reports (herein, one or more "diagnostic data reports") including an event data report with system condition data and including diagnostic information derived at least in part from the event data report (block 710). Examples of such diagnostic information include filtered data readings, averages of data readings, collections of error messages, or system interrupts. Examples of such reporting events may be similar to those described above with respect to block 610 of FIG. 6. In some embodiments, reporting the one or more diagnostic data reports includes wireless transmission of the event data 380 (having the diagnostic data reports), using the network interface 345, over the network 254 to the server 250 for storage as the event data 325 in the server memory 305.

In some embodiments, the processor 350 generates the diagnostic information based at least in part on sensor information from one or more event data reports, for example, by executing diagnostic reporting algorithms to pair error messages and associated sensor readings that are linked by a common time stamp from the clock 332. In some embodiments, the processor 350 generates the diagnostic information using similar techniques as described above with respect to the server processor 310.

In some embodiments of the method 700, the processor 350 generates the diagnostic information for use in block 710 based at least in part on sensor information from one or more event data reports on a periodic time schedule assessed from readings of clock 332, and the processor 350 records to the memory 355 the event data report, as event data 380, including the system condition data in response to aperiodic system interrupts, such as sensor readings from a sensing component 386. In some embodiments, the aperiodic system interrupts include interface events, such as user input at a user interface 384. In some embodiments, the aperiodic system interrupts include sensor data alarm events, representing abnormal readings at a sensing component 386, such as an abnormal temperature at a temperature sensor.

In some embodiments, the processor 350 reports over the network interface 345 to the server 250 the one or more diagnostic data reports in response to a first set of system interrupts, such as a request for data received over the network interface 345 from the server 250, and the processor 350 of the garage door opener 100 records to the memory 355 the diagnostic data report in response to a second set of system interrupts, such as user input at a user interface 384. In some embodiments, the second set of system interrupts includes interface events (e.g., at the user interface 384) and the first set of interrupts includes network data request events (e.g., received via the network interface 345).

In some embodiments, the server processor 310 may receive and store event data reports for a plurality of garage door openers 100, using similar techniques as described with respect to a single of the garage door openers 100 in the method 600 of FIG. 6, to generate aggregated report data. The aggregated report data may, for example, be organized as a database with entries for the system condition data of the event data reports (e.g., each instance of opening the garage door with indoor keypad, closing the garage door with outdoor keypad, opening the garage door with personal wireless device, enabling the light unit 152, detecting motion, errors/faults of components, measured motor current, and the like) having associated time stamps, and the serial number of the associated garage door opener 100.

The server processor 310 may further analyze the aggregated report data to generate global diagnostic information, for example, which has various applications. For example, global diagnostic information may indicate average usage of the garage door openers. This data, in turn, can be used to predict life expectancy for the garage door openers, to make maintenance scheduling suggestions, and select components of the garage door opener (e.g., the motor 212) such that the garage door opener will achieve certain life expectancy levels. Additionally, in some embodiments, global diagnostic information is used to identify peak use times (e.g., heavy usage on weekdays between 7:00 am and 9:00 am) and identify low use times (e.g., Sunday from 1:00 am to 3:00 am). In turn, the server 250 may be configured to receive an update via the network 254 from another computing device (not shown), such as a software update to update instructions on the server memory 305 executed by the server processor 310 to communicate with the garage door opener 100, during the identified low use time. By performing the update in the low use time, the number of garage door openers that may experience service outages is reduced or minimized. Moreover, the server 250 may be provided with additional computing resources during the identified peak times to address heavier data traffic without a slowdown in server to garage door openers. For example, the server 250, while illustrated as having a single server processor 310, single memory 305, and single network communication interface 315, may, in some embodiments, include a plurality of each. Accordingly, the server 250 may provide parallel computing to address, for example, processing, data storage, and communication operations (such as described above) with a plurality of garage door openers 100. To obtain additional computing resources, the server 250 may, for example, request and be allocated additional server processors, server memories, and network communication interfaces from a larger server system.

Additionally, in some embodiments, the server processor 310 is configured to analyze the aggregated report data and determine feature usage rates for features of the garage door openers 100. For example, the server processor 310 may identify that the outdoor keypad 264 is used more than the wireless remotes 262, and that the wireless remotes 262 are used more than another user interface (e.g., the personal wireless device 256). This information may be then used to guide further design efforts for the garage door openers 100.

Accordingly, embodiments disclosed herein enable monitoring of and diagnosis of garage door openers by logging data, reporting out data asynchronous to the logging of data, and providing diagnostic reports based on the data. Provision of this information over a network allows performance monitoring by parties lacking direct access to the garage door opener. In response to events internal to or external to the garage door opener, which are detected by sensors associated with the garage door opener, logging operations can be activated, thus allowing the garage door opener to capture data for subsequent transmission when events indicate that transmission is preferred.

Further, where events are linked to time of day or time relationships between events and are accompanied by motion detectable by a motion detector, detection of events and response to the events enables response by components of the garage door opener to respond to motion detected by the garage door opener in a time-appropriate fashion. Further, embodiments disclosed herein provide the ability for the responses to conditions and motion to be learned by the garage door opener or to be encoded as rules by an external server and then provided to the garage door opener based on events recorded by the garage door opener. Some embodiments disclosed herein include other advantages not expressly listed as well.

The processors described herein may be configured to carry out the functionality attributed thereto via execution of instructions stored on a computer readable medium (e.g. one of the illustrated memories), in hardware circuits (e.g., an application specific integrated circuit (ASIC) or field programmable gate array) configured to perform the functions, or a combination thereof.

Although the invention has been described in detail with reference to certain preferred embodiments, variations and modifications exist within the scope and spirit of one or more independent aspects of the invention as described.

## Claims

1. A garage door opener system, the system comprising:
a motor configured to drive a garage door;
a network interface;
a sensor configured to sense a physical characteristic;
a memory storing program instructions; and
an electronic processor coupled to the motor, the network interface, the sensor, and the memory, the electronic processor, through retrieval and execution of the program instructions, configured to:
responsive to a garage door opener system condition logging event, record to the memory a garage door opener event data report including system condition data collected from the sensor; and,
responsive to a garage door system condition reporting event, report the garage door opener event data report to a remote server via the network interface, wherein the garage door system condition reporting event is distinct from the garage door opener system condition logging event.

2. The system of claim 1, wherein the garage door opener system condition logging event includes a detected change in data from the sensor, a detected change in data from a garage door opener system component, or a received request from a user interface, or
wherein the garage door opener system condition logging event is an aperiodic system interrupt including at least one selected from the group consisting of a user interface event and a sensor data alarm event.

3. The system of claim 1 or claim 2, wherein the electronic processor is further configured to:
generate diagnostic information based at least in part on sensor information included in the garage door opener event data report, and,
responsive to the garage door system condition reporting event, report via the network interface to the remote server a garage door opener diagnostic event data report that includes the diagnostic information and the garage door opener event data report.

4. The system of any preceding claim, wherein the system condition data includes associated time stamp information, and the garage door opener event data report includes an identifier of the garage door opener system.

5. The system of any preceding claim, wherein the electronic processor is further configured to report, via the network interface to the remote server, the garage door opener event data report asynchronously relative to the electronic processor recording to the memory the garage door opener event data report.

6. The system of any preceding claim, wherein the electronic processor is further configured to report, via the network interface to the remote server, the garage door opener event data report on a periodic time schedule.

7. The system of any preceding claim, wherein the garage door opener system condition reporting event is a first type of system interrupt, and wherein the garage door opener system condition logging event is a second type of system interrupt, or
wherein the second type of system interrupt includes user interface events and the first type of interrupt includes network data request events.

8. The system of any preceding claim, wherein the sensor is at least one selected from the group consisting of a door sensor, a passive infrared motion sensor, a camera, a heat sensor, an electro-sensitivity scanner, and a proximity sensor.

9. The system of any preceding claim, further comprising:
a second sensor configured to sense a second physical characteristic, wherein, responsive to the garage door opener system condition logging event, the electronic processor is further configured to record to the memory the garage door opener event data report including system condition data collected from the second sensor.

10. A method for responding to garage door opener events, the method comprising:
determining, by an electronic processor of a garage door opener, an occurrence of a condition logging event in the garage door opener system, the electronic processor coupled to a memory storing program instructions, a network interface, and a sensor configured to sense a physical characteristic;
responsive to the garage door opener system condition logging event, recording to the memory a garage door opener event data report including system condition data collected from the sensor;
determining, by the electronic processor, an occurrence of a garage door system condition reporting event distinct from the condition logging event; and
responsive to the garage door system condition reporting event, reporting the garage door opener event data report to a remote server via the network interface.

11. The method of claim 10, wherein determining the occurrence of the garage door opener system condition logging event includes at least one selected from the group consisting of detecting a change in data from the sensor, detecting a change in data from a garage door opener system component, and receiving a request from a user interface, or
wherein determining, by the electronic processor, the occurrence of the garage door system condition reporting event is in response to receipt of an aperiodic system interrupt including at least one selected from the group consisting of a user interface event and a sensor data alarm event..

12. The method of claim 10 or claim 11, further comprising, reporting, via the network interface to the remote server, the garage door opener event data reports asynchronously relative to the recording to the memory of the garage door opener event data report.

13. The method of any one of claims 10 to 12, further comprising, reporting, via the network interface to the remote server, the garage door opener event data report on a periodic time schedule.

14. The method of any one of claims 10 to 13,
wherein determining, by the electronic processor, the occurrence of the garage door system condition reporting event is in response to receipt of a first type of system interrupt, and
wherein determining, by the electronic processor, the occurrence of the garage door system condition logging event is in response to receipt of a second type of system interrupt.

15. The method of claim 14, wherein the second type of system interrupt includes user interface events, and the first type of system interrupt includes network data request event.
